# EUROPEAN PATENT APPLICATION

(11) **EP 3 425 305 A1**
(43) Date of publication of application: **09.01.2019**
(21) Application number: 18181578.8
(22) Date of filing: 04.07.2018
(51) Int. Cl.: F24S 30/428, F24S 50/20

(54) **Solar panel arrangement**

(30) Priority: 07.07.2017 FI 20175667
(71) Applicant: Hanlog Oy, 37600 Valkeakoski (FI)
(72) Inventor: Puttonen, Mikko, 37600 Valkeakoski (FI); Xhemajli, Fatbardh, 37600 Valkeakoski (FI)
(74) Representative: Kolster Oy Ab

(57) **Abstract**

The invention relates to a solar panel arrangement and a method for controlling a solar panel (3). A solar panel arrangement comprises a solar panel (3), a support structure for the solar panel (3), a joint structure for allowing an East-West tracking, an actuator for moving the solar panel (3), and a controller (1) for controlling the movement of the solar panel (3). The controller (1) is arranged to control the solar panel (3) to a middle position as a response of light intensity lowering below a certain value.

## Description

### FIELD OF THE INVENTION

The invention relates to a solar panel arrangement and a method for controlling a solar panel.

### BACKGROUND OF THE INVENTION

The effect of a fixed solar panel is limited. Therefore solar tracking is also used which means that the solar panel is turned to follow the sun. Solar tracking typically requires a complicated and cumbersome structure for the arrangement.

### BRIEF DESCRIPTION OF THE INVENTION

An object of the present invention is to provide a new solution. The objects of the invention are achieved by what is stated in the independent claims. The preferred embodiments of the invention are disclosed in the dependent claims.

### BRIEF DESCRIPTION OF THE DRAWINGS

In the following the invention will be described in greater detail by means of preferred embodiments with reference to the attached drawings, in which
Figure 1 is a function diagram of a solar panel arrangement;
Figure 2 schematically shows a controller;
Figure 3 schematically shows a solar panel arrangement;
Figure 4 schematically shows a side view of the solar panel arrangement of Figure 3; and
Figure 5 schematically shows a two-sided movable joint.

### DETAILED DESCRIPTION OF THE INVENTION

In this description the terms solar panel, photovoltaic panel and PV panel are used of the same device.

Microprocessor and Electro-Optical Sensors tracking method is used in tracking the sun for PV panels.

The methodology is usually the same throughout different systems but there are a few minor differences among sensor types and accuracies. The most common type of microprocessor and electro-optical solar tracking system consists of a few basic components: power transformer, smart unit (microcontroller), light sensors, motor drives and motors.

Power transformation is the first step to achieving solar tracking. The transformation of power is needed upon the different electronic use requirements, usually standard values: 3.3V, 5V, 12V and 24V. In most cases the motor operates in a different voltage than the electronics, therefore the motor driver operates in two different voltages that should be supplied by the transformer. Standard voltage transformers are widely available in the market for purchase but in utmost cases, the transformer has to be designed by the system designer due to specific input and output voltages and currents.

The computing part of the solar tracking system can be any type of computer that has the ability to calculate input data supplied by the sensors. The main task of the computer is to locate the sun based on the difference in light intensity sensed by the sensors. The locating of the sun is accomplished by setting an equal value point in between sensors. As the sensors are placed in a different angle form one another, they will be receiving different light intensity, by moving the platforms and searching the position until all the sensors have equal value, the sun tracking is achieved.

Different computers are used for different applications. In solar tracking, the complexity of the system is much easier and does not require much computing power. It is efficient to use the microcontrollers as a computer in the tracking systems. A microcontroller has its own internal RAM and ROM memories and it is all integrated in a single microchip. Dependent on the application, the solar tracking system has few inputs and outputs. Inputs can be the light sensors (two per axis), limit switches, interface buttons or other interface modules. The outputs will be the motor driver pins, two per motor (if the motor is DC), light indicators, data transmission connections etc.

The light sensors are the first component that has contact with the sun. Different light sensors are used for different accuracies. The most common used ones are called photodiodes and photo resistors. Photodiodes and photo-resistors operate in the same principle - by changing values of resistance due to light intensity changes. It is known that a normal microcontroller cannot detect any resistance changes, the photodiodes have to be connected in series with resistors of higher value and a signal voltage to be applied through the connection. As the resistance of the sensor changes due to light intensity, the voltage across the connection changes also.

The difference between sun tracking sensors, is ability to detect different light intensity and waves. As every tracking system has motors to accomplish movement towards sun, the motors need to be controlled. Motor drives help the system attain a controlled movement and perform the desired output. A motor drive depend on the type of the motor used. For a conventional DC motor, the drives are very simple and the designer can build it, as for other types of motors such as servomotor or stepper motor, the drives are much more complex and costly. As stated previously the most commonly used drives in solar tracking applications are DC motor drives. Through a drive, you can variate the speed, torque, position, brakes, and reverse rotation.

The motor is the part that may execute all the calculation and the sun sensing that is performed by the electronics. The motor may provide the movement towards the sun of the tracking structures. Different motors provide different type of movements, accuracies and force. In a sun-tracking platform, the motor is used with a gearbox providing a gear ratio confiding on rotational force and speed. As the system aims to achieve higher tracking accuracy, the type of the motor has to be more easily controllable in different positions. For example, a stepper motor provides the control of different steps in a rotating axle.

Stepper motors are motors that move in single steps and work with DC. They have different phases (coils with individual magnetic fields). By energizing each phase in sequence, the motor will rotate, one-step at a time. This motor allows very precise positioning in each phase if a computer is used as a controller. A stepper motor is the first choice motor if the tracking system aims higher accuracy. Stepper motors vary in size, power and electrical characteristics.

Another type of motor in the solar tracking systems is a normal DC motor that drives an actuator. These available linear actuators typically have a DC motor mounted beside the threaded section that is driven by a belt and pulley or by gears. The threaded or spindle section is contained in a tube. A fixed nut is connected to an over tube that pushes an actuation rod in and out. This type of DC linear actuator has two integrated limit switches that are connected in series with two diodes. The function of the limit switches is so that the rod movement is controlled and the function of the diodes is to keep the motor enabled in opposite direction after the limit has been reached.

The presented solution makes an easier approach to tracking system. The presented solution may provide the existing single PV panels with a tracking system that would offer up to 40% more power efficiency and that would be enough cost effective that it would not change the normal price per watt of the PV solar systems. The presented solution provides for easy mounting system, lightweight, easy installation, easy transportation, packing and so on.

The presented product consists of several parts. The electronics, automation and mechanical parts compose a complete product.

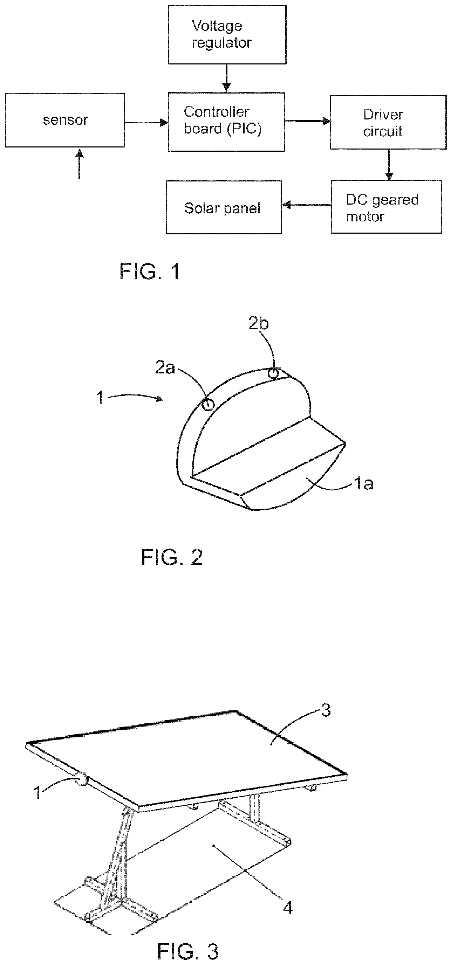

A microprocessor and Electro-optical sensors is the tracking method used in the present solution. The basic function diagram for design was simple as can be seen in Figure 1. A voltage regulator regulates high voltages from the PV panel to required optimum voltage 12V. A microcontroller (PIC) is receiving data from the sensor and driving the motor driver circuit. The motor driver is driving then the geared motor and providing movement to the panel. As the panel moves, the data received by sensors changes and the whole process is an ongoing loop. See figure 1.

Based on the diagram in Figure 1, there is a need to regulate the voltage, to calculate the data and to drive the motor.

Executing the function of sun tracking is the primary duty for the electronic board (PIC). To increase the tracking efficiency to a higher level the present solution provides for the idea of adjusting morning and evening positions. As the sun rises in the east, it is not power efficient if the solar panel is facing west. The solution lies within the programming code. Two angular mercury limit switched is introduced, as the solar panel faces west (evening position), one of the limit switches triggers a signal and the solar panel starts moving towards east (morning position). At the time it reaches middle position, another limit switch triggers a signal and the solar panel stops moving, waiting for the next day sun movements.

The main function of the code is to calculate the brightest spot of the ambient and allow the motor driver to run the motor until both sensors receive equal amount of light. The code had also panel positioning functions like morning positioning, evening positioning and middle positioning.

The controller for controlling the movement is preferably assembled in a plastic box. The controller 1 is shown in Figure 2. Within the plastic box, there would be the designed electronic board, the angular mercury limit switches, the photo diodes or sensors 2a, 2b and the wire rubber connector.

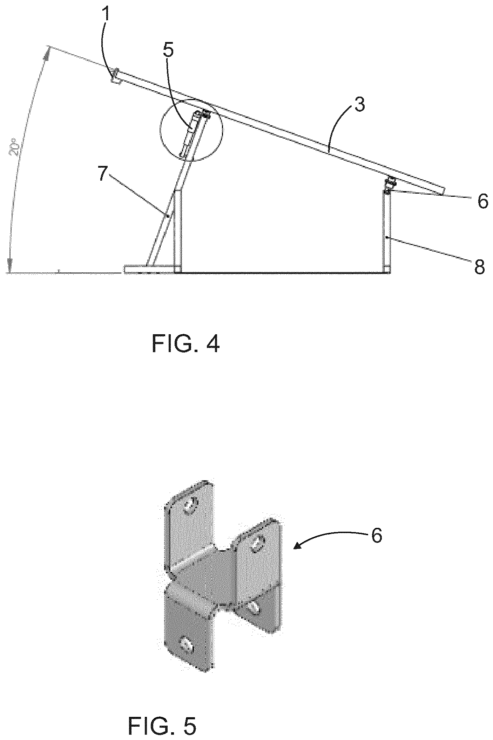

The electronic board should be water, humidity and dust protected. The solar panel will be facing the sun sometimes in extreme high temperatures and the sensors 2a, 2b will face the sun as well. The solution to those obstacles is that the sensors are separated from the board. As a result, the placement of the sensors will be in front and the electronic board will be placed in the back. Thus, as can be seen in Figures 2 and 4, the controller 1 is formed angular such that the part 1a comprising the electronic board is positioned behind the solar panel 3. Thereby the electronic board is protected from direct sunlight.

The concept of the plastic enclosure is to be completely sealed, as the customers would not be able to open it and replace components, instead the whole box would need replacement in case of malfunctioning.

The method for the plastic box manufacturing is a technique called injection molding. The controller has a circular shape with sensors apart and a protruding part 1a comprising the electronic board as can be seen in Figure 2.

The plastic box apart from a SolidWorks calculated sun sensor placement, it has also two limit switch rails; for the limit switches to be installed. The cap is clamping the sensors when it closes and the wire output connector is at the bottom of the box.

Typically, a photovoltaic installation process starts with the mounting structure that will support the panels. The present solution provides for a unique mounting structure for the solar panel.

The presented mounting system is easy to mount, lightweight and low cost. The whole tracking system could be set up by the customers.

According to an embodiment the solution is an aluminium profile mounting system. In the embodiment where the solution is a single axis tracking system, the support parts are simply two aluminium profile triangles creating a bearing for the solar panel. As the East West tracking axis is solved, the solution is also provided with optional North South (or summer winter) axis manual movement possibilities.

The aluminium profiles may be bolted in the ground, roof, or wall and provide strength and movement for the solar panel. The overall structure is supposed to allow +-45 degrees East West movement and 40 degrees North South manual movement. To allow the North South movements, a movable ball joint may be used.

According to an embodiment the design may consist of a reinforced stainless steel structure with a telescope pillar that can change the North South degrees of the panel. In the lower end of the structure, a two-sided self-built movable joint may be used to allow East West North and South free movement.

The structure of the solar panel can be seen in Figures 3 and 4. Figure 3 shows a stainless steel mounting structure including the solar panel 3 and the installation pad numbered 4 in the Figure.

Figure 4 shows a different angle stainless steel mounting structure including the actuator 5, a two-sided movable joint 6, a telescope pillar 7, and a lower mounting part 8.

Figure 5 shows an example of a two-sided movable joint 6 having a simple structure.

The aim of the presented solution is to offer an inexpensive and power efficient solar panel. By a simple solution it is even possible to lower or keep the sales price the same as the systems without tracking.

According to an embodiment, the solution provides a single solar panel tracking system, unique mounting system that allows +/-45 degrees in East West tracking. An adjustable telescope beam that allows North South angle adjustments, unique plastic enclosure with position sensors and specific type of motor.

The presented solution is wind and heavy load resistant.

According to an embodiment, the actuator is arranged to get its energy directly from the solar panel. This means that the arrangement does not have any energy storage, such as a battery, where the energy from the solar panel could be stored and wherefrom the actuator could get energy. Thereby, the arrangement has only small amount of different parts and is therefore simple.

According to an embodiment, the controller is arranged to control the solar panel to a middle position after the solar panel has reached an evening position. Because the solar panel is controlled to the middle position after it has reached the evening position the panel is ready to effectively absorb radiation also early in the morning. However, the panel is not directly controlled to the morning position whereby it also quite effectively absorbs radiation in the evening when it is in the middle position.

According to an embodiment, the controller monitors the intensity of light the sensors and thereby the solar panel receives. When the intensity of light lowers below a certain first value, the controller controls the panel to the middle position. Thus, in the evening when the sun sets the panel is returned to the middle position. Also, if dark clouds, snow or any other extreme condition causes the light intensity to lower below the certain value the controller controls the panel to the middle position. When the panel is in the middle position it reliably starts to track the sun when the intensity of light again rises above a certain second value. The certain second value may be higher than the certain first value. It is possible that the panel is controlled to the middle position before the end of the day and that the light intensity rises above the certain second value before the end of the day. In such situation, for example, the panel starts to track the sun more reliably than a panel that is controlled to a morning position.

When the panel is controlled to the middle position as described above, the arrangement is reliable in extreme weather conditions, also. In the middle position the panel is as effective as a fixed panel. If the actuator is arranged to get its energy directly from the solar panel, the certain first value is determined to be so high that the actuator is able to perform the movement of the panel to the middle position.

According to an embodiment, the actuator comprises a motor and an actuation rod, and the actuator is positioned such that the actuation rod faces down. Thereby the actuator is effectively protected against moisture because water is not flowing on the surface of the rod into the motor.

According to an embodiment, the actuator is positioned in connection with a pillar which has an angle of substantially 90 degrees with respect to the longitudinal axis of the solar panel. Thus, if the longitudinal axis of the solar panel is assembled inclined such that the angle between the axis and a horizontal direction is 20 degrees the angle between the pillar and a vertical direction is about 20 degrees, for example. This provides for the advantage that the structure is durable because stresses in the structures are avoided or reduced although the panel is tilted +-45 degrees, for example. Thus, the joint may have a simple structure and a ball joint, for example, is not necessarily needed. According to an embodiment, the angle between the pillar and the axis is between 80 - 100 degrees.

According to an embodiment, the the tracking system is for a single panel. Thus, there is a controller for a solar panel. This makes the concept simple because there is no need for a large control system and connections relating thereto, for example.

According to an embodiment, the panel has a unique lightweight structure of about 20 kg/m².

It will be obvious to a person skilled in the art that, as the technology advances, the inventive concept can be implemented in various ways. The invention and its embodiments are not limited to the examples described above but may vary within the scope of the claims.

## Claims

1. A solar panel arrangement, comprising a solar panel, a support structure for the solar panel, a joint structure for allowing an East-West tracking, an actuator for moving the solar panel, and a controller for controlling the movement of the solar panel, wherein the controller is arranged to control the solar panel to a middle position as a response of light intensity lowering below a certain value.

2. An arrangement as claimed in claim 1, wherein the actuator is arranged to get its energy directly from the solar panel.

3. An arrangement as claimed in claim 1 or 2, wherein the controller is arranged to control the solar panel to the middle position after the solar panel has reached an evening position.

4. An arrangement as claimed in any one of the preceding claims, wherein the actuator comprises a motor and an actuation rod, and the actuator is positioned such that the actuation rod faces down.

5. An arrangement as claimed in any one of the preceding claims, wherein the actuator is positioned in connection with a pillar, which has an angle of substantially 90 degrees with respect to the longitudinal axis of the solar panel.

6. An arrangement as claimed in any one of the preceding claims, wherein the tracking system is for a single panel.

7. A method for controlling a solar panel, the method comprising performing tracking such that the solar panel is turned such that it follows the sun, monitoring light intensity received by the solar panel and controlling the solar panel to a middle position when the intensity of light lowers below a certain value.

8. A method as claimed in claim 7, wherein energy to an actuator turning the panel is supplied directly from the solar panel.

9. A method as claimed in claim 7 or 8, wherein the solar panel is controlled to the middle position after the solar panel has reached an evening position.
